# EUROPÄISCHE PATENTSCHRIFT

(11) **EP 3 911 471 B1**
(45) Veröffentlichungstag und Bekanntmachung des Hinweises auf die Patenterteilung: **04.01.2023**
(21) Anmeldenummer: 20804299.4
(22) Anmeldetag: 17.11.2020
(51) Int. Cl.: B23K 9/127, B23K 9/173, B23K 9/12

(54) **VERFAHREN ZUM ABTASTEN DER OBERFLAECHE METALLISCHER WERKSTUECKE UND VERFAHREN ZUR DURCHFUEHRUNG EINES SCHWEISSPROZESSES**
METHOD FOR SCANNING THE SURFACE OF METALLIC WORKPIECES
PROCÉDÉ DE BALAYAGE DE LA SURFACE DE PIÈCES MÉTALLIQUES

(30) Priorität: 18.11.2019 EP 19209707
(43) Veröffentlichungstag der Anmeldung: 24.11.2021
(73) Patentinhaber: FRONIUS INTERNATIONAL GmbH, 4643 Pettenbach (AT)
(72) Erfinder: MAYER, Manuel, 4643 Pettenbach (AT); WALDHÖR, Andreas, 4643 Pettenbach (AT); BINDER, Manuel, 4643 Pettenbach (AT)
(74) Vertreter: SONN Patentanwälte OG
(86) Internationale Anmeldenummer: PCT/EP2020/082318
(87) Internationale Veröffentlichungsnummer: WO 2021/099286

(56) Entgegenhaltungen:
- WO-A1-2019/002141
- JP-A- S5 564 970
- JP-A- H07 308 780
- JP-A- 2013 056 353

## Beschreibung

Die Erfindung betrifft ein Verfahren zum Abtasten der Oberfläche metallischer Werkstücke, wobei vor der Durchführung eines Schweißprozesses während eines Abtastprozesses ein Schweißbrenner mit einem abschmelzbaren Schweißdraht mit Hilfe eines Manipulators entlang einer vorgegebenen Bahn und mit einer vorgegebenen Geschwindigkeit über die Oberfläche der Werkstücke bewegt wird, und zu vorgegebenen Zeitpunkten der Schweißdraht mit einer ersten Vorwärtsgeschwindigkeit zur Oberfläche der Werkstücke bewegt wird, bis von einer Schweißstromquelle ein Kontakt des Schweißdrahts mit einem der Werkstücke detektiert wird, und der Schweißdraht anschließend mit einer ersten Rückwärtsgeschwindigkeit wieder von den Werkstücken wegbewegt wird, und die Position der Oberfläche der Werkstücke zu jedem Zeitpunkt in der Schweißstromquelle ermittelt und gespeichert wird, wobei beim Überschreiten der aktuellen Position der Oberfläche der Werkstücke um einen vorgegebenen Schwellwert über zumindest einer der gespeicherten vorhergehenden Positionen der Oberfläche der Werkstücke eine Kante ermittelt wird, wobei im Falle der Ermittlung einer Kante ein Kantendetektionsparameter (KP) gesetzt und zusammen mit dem aktuellen Positionswert (Pi ) ausgegeben und an den Manipulator übertragen wird.

Weiters betrifft die Erfindung ein Verfahren zur Durchführung eines Schweißprozesses mit einem Schweißbrenner mit einem abschmelzbaren Schweißdraht an Werkstücken.

Der Schweißdraht eines Schweißgeräts kann vor einem Schweißprozess dazu verwendet werden, die Oberfläche der zu bearbeitenden Werkstücke abzutasten, indem der Schweißdraht als Sensor verwendet wird, indem er zu vorgegebenen Zeitpunkten in Richtung Werkstück bewegt wird, bis der Schweißdraht das Werkstück berührt. Anschließend wird der Schweißdraht wieder vom Werkstück wegbewegt. Über die Bewegungen des Schweißdrahts, welche durch Drehgeber in den Antriebsrollen des Vorschubgeräts erfasst werden, kann auf die Position des Schweißdrahts beim Kontakt mit dem Werkstück, und somit auf die Position der Oberfläche des Werkstücks rückgeschlossen werden.

Beispielsweise beschreibt die WO 2019/002141 A1 ein Verfahren und eine Vorrichtung zur Abtastung einer Oberfläche eines metallischen Werkstücks mit Hilfe des Schweißdrahts des Schweißbrenners. Dabei wird während des Abtastprozesses bei jedem Kurzschluss des Schweißdrahts mit dem metallischen Werkstück ein Positionswert ermittelt und gespeichert bzw. ausgegeben, welcher vom Manipulator zum Detektieren einer Kante oder einer bestimmten Position benutzt werden kann. Die hierfür benötigten Algorithmen müssten von sämtlichen Herstellern von Manipulatoren in deren Steuerung implementieren werden, was softwaremäßig einen sehr großen Aufwand bedeutet. Vorhandene Robotersteuerungen und Interfaces brauchen für eine solche Auswertung üblicherweise zu lange, weshalb nur sehr geringe Geschwindigkeiten des Schweißbrenners während des Abtastprozesses für eine ausreichende Genauigkeit gewählt werden können.

Aus der JP 2013 56353 A ist ein Verfahren zur Detektion der Position einer Kante einer Überlappnaht zweier überlappender Werkstücke bekannt geworden. Hier wird die Oberfläche des oberen Werkstücks mit dem Schweißdraht abgetastet und das Vorliegen einer Kante festgestellt, wenn die vertikale Distanz von einem Berührungspunkt zum nächsten größer oder gleich einem vorgegebenen Schwellwert ist. Danach wird der Abtastvorgang gestoppt.

Die JP H07 308780 A beschreibt ein Verfahren zur Erfassung der Breite des Spalts zwischen zwei Werkstücken, wobei der Schweißdraht an der Oberfläche eines Werkstücks entlangfährt, bis die Kante als Beginn des Spalts detektiert wird. Die JP S55 64970A offenbart ein Verfahren zum Abtasten der Oberfläche metallischer Werkstücke mittels eines vor- und zurück bewegten Schweißdrahts und bildet die Basis für den Oberbegriff des Anspruchs 1.

Die Aufgabe der vorliegenden Erfindung besteht in der Schaffung eines oben genannten Abtastverfahrens und Schweißverfahrens, welches möglichst rasch durchführbar sein soll und keine besonderen Rechenleistungen für die Auswertung im Manipulator erfordert. Nachteile bekannter Abtastverfahren sollen verhindert oder zumindest reduziert werden.

Gelöst wird die erfindungsgemäße Aufgabe durch ein Verfahren nach Anspruch 1, wobei bei Gleichbleiben bzw. im Wesentlichen Gleichbleiben der aktuellen Position der Oberfläche der Werkstücke gegenüber zumindest einer der gespeicherten vorhergehenden Positionen das Ende der Kante festgestellt wird, und im Falle der Ermittlung einer Kante ein Kantendetektionsparameter gesetzt und zusammen mit dem aktuellen Positionswert ausgegeben und an den Manipulator übertragen wird. Erfindungsgemäß wird beim Abtastprozess die Kante und das Ende der Kante festgestellt und es erfolgt die Verarbeitung der Daten für die Kantendetektion in der Stromquelle bzw. im Schweißgerät und es wird an Stelle einer Vielzahl von Positionsdaten lediglich ein Kantendetektionsparameter gesetzt und zusammen mit dem aktuellen Positionswert ausgegeben und an den Manipulator weitergeleitet. Dadurch kann die Auswertung, welche bisher vom Manipulator bzw. Schweißroboter durchgeführt wurde, schneller erfolgen und dadurch auch der Abtastprozess rascher durchgeführt werden. Da die Verarbeitung während des Abtastprozesses vom Schweißgerät bzw. der Stromquelle vorgenommen wird, müssen auch keine entsprechenden Rechenkapazitäten im Manipulator vorgesehen werden. Nach dem neuen Verfahren wird lediglich beim Überschreiten des vorgegebenen Schwellwerts in einer Richtung, welche der Längsrichtung des Schweißdrahtes entspricht, ein Kantendetektionsparameter gesetzt, der das Vorliegen der Kante anzeigt. Im Falle des Setzens des Kantendetektionsparameters wird der aktuelle Positionswert gespeichert bzw. ausgegeben. Im Gegensatz zur Übertragung einer Reihe von Positionswerten an den Manipulator muss beim gegenständlichen Verfahren lediglich der Kantendetektionsparameter zusammen mit dem aktuellen Positionswert an den Manipulator übermittelt werden. Dadurch ist das Verfahren viel schneller und einfacher durchführbar. Der Manipulator muss nicht so viele Daten auswerten wie bisher, weshalb der Manipulator schneller arbeiten kann, oder die Rechenleistung des Manipulators nicht mehr so groß sein muss, und dieser somit einfach und billiger ausgeführt werden kann. Als Manipulator kommt insbesondere ein Roboter infrage, aber auch andere Einrichtungen, wie z.B. automatische Schweißvorrichtungen, Linearbewegungseinrichtungen oder dgl.. Durch die direkte Auswertung in einem Prozessregler des Schweißgeräts bzw. der Stromquelle kann man das Abtastverfahren prozesssynchron und flexibler filtern, weshalb es auch möglich ist, Kanten von Werkstücken auf unebenen, schrägen oder gekrümmten Oberflächen zu erkennen. Dadurch, dass der Manipulator beim gegenständlichen Auswerteverfahren nur noch den Kantendetektionsparameter, der im einfachsten Fall nur ein Bit umfasst, abfragen muss, kann die Verfahrensgeschwindigkeit ohne Genauigkeitsverlust deutlich erhöht werden.

Vorteilhafterweise wird beim Überschreiten der aktuellen Position der Oberfläche der Werkstücke um einen vorgegebenen Schwellwert über dem Mittelwert von mehreren, vorzugsweise 2 bis 100 gespeicherten vorhergehenden Positionen der Oberfläche der Werkstücke eine Kante ermittelt. Dies stellt eine geeignete Verfahrensoption dar, welche durch die Bildung von Mittelwerten nicht so störungsanfällig ist. Durch eine entsprechende Mittelwertbildung wird bei einer langsam stetig ansteigenden Werkstückoberfläche nie eine Kante detektiert und ein Kantendetektionsparameter gesetzt und zusammen mit dem aktuellen Positionswert ausgegeben.

Gemäß einem weiteren Merkmal der Erfindung wird die Differenz der Position der Oberfläche der Werkstücke am Ende der ermittelten Kante und der letzten gespeicherten Position vor dem Feststellen der Kante in senkrechter Richtung zur Oberfläche der Werkstücke oder in Richtung der Längserstreckung des Schweißdrahtes als Wert der Kantenhöhe ermittelt und ausgegeben. Mit dem erfindungsgemäßen Verfahren kann in Abhängigkeit der vorgegebenen Zeitpunkte, zu welchen die Oberfläche der Werkstücke mit dem Schweißdraht abgetastet wird, auf die Kantenhöhe sehr präzise gemessen und einem Sollwert gegenübergestellt werden. Zusätzlich zum oben genannten Kantendetektionsparameter kann nach der Ermittlung der Kante auch dieser Wert der Kantenhöhe in einer entsprechenden Genauigkeit (z.B. 16-Bit-Wert) ausgegeben und beispielsweise an den Manipulator weitergeleitet werden.

Weiters kann aus den gespeicherten Positionen der Oberfläche der Werkstücke zwischen dem Ende der ermittelten Kante und der gespeicherten Position nach dem Feststellen der Kante die Kantenneigung ermittelt und ausgegeben werden. Wenn beim Abtastprozess auch die Kantenneigung ermittelt wird, kann diese in einem nachfolgenden Schweißprozess berücksichtigt werden und bei Abweichungen der tatsächlichen Kantenneigung vom Sollwert eine Anpassung von Schweißparametern zur Erzielung einer optimalen Schweißqualität vorgenommen werden. Ab einem gewissen voreingestellten Wert der Kantenneigung kann die Kantendetektion auch deaktiviert werden, da es sich dann nicht mehr um eine Kante handeln wird.

Schließlich kann aus den gespeicherten Positionen der Oberfläche der Werkstücke zwischen dem Ende der Kante und der gespeicherten Position nach dem Feststellen der Kante der Radius der Kante ermittelt und ausgegeben werden. Zusätzlich zu den oben erwähnten Kantenparametern stellt der Kantenradius einen weiteren Parameter dar, der beim Abtastprozess erfasst werden kann, sodass eine Berücksichtigung während eines Schweißprozesses vorgenommen werden kann. Bei Abweichungen des Kantenradius von einem gewünschten Wert kann eine entsprechende Anpassung der Schweißparameter während des Schweißprozesses vorgenommen werden, um Ausschuss zu vermeiden und die Wirtschaftlichkeit des Schweißverfahrens zu erhöhen.

Wenn die Kantenhöhe, die Kantenneigung und bzw. oder der Radius der Kante an den Manipulator übermittelt wird, kann zumindest einer dieser Parameter im Manipulator berücksichtigt werden. Beispielsweise kann die Geschwindigkeit des Manipulators verringert werden, wenn eine vom Sollwert abweichende Kantenhöhe detektiert wird. Auch bei Übermittlung sämtlicher Eigenschaften der Kante ist die Datenübertragung gegenüber herkömmlichen Verfahren, bei welchen sämtliche Positionswerte an den Manipulator übermittelt wurden, deutlich reduziert, wodurch das Verfahren rascher durchgeführt werden kann oder weniger Rechenleistung im Manipulator erforderlich ist. Eine aufwändige Verarbeitung der rohen Positionsdaten im Manipulator ist somit nicht mehr notwendig.

Als Schwellwert für die Feststellung einer Kante kann beispielsweise eine Distanz bzw. ein Positionswert in senkrechter Richtung zur Oberfläche der Werkstücke oder in Richtung der Längserstreckung des Schweißdrahtes, im Bereich zwischen 0,1mm und 20mm festgelegt werden. Diese Werte sind für eine zuverlässige Detektion einer Kante beim Abtastprozess besonders geeignet. Unterhalb der Grenze von 0,1mm ist die Festlegung eines Schwellwerts nicht sinnvoll, da es aufgrund der Genauigkeitsgrenzen der Einrichtungen zu Fehlinterpretationen und somit fehlerhaften Detektionen von Kanten kommen würde.

Entsprechend einer Abtastfrequenz von 20Hz bis 200Hz kann der Schweißdraht in Zeitabständen von 5ms bis 50ms, vorzugsweise von 10ms, zur Oberfläche der Werkstücke bewegt werden. Dies stellt einen vernünftigen Kompromiss zwischen der Genauigkeit der Detektion und einer möglichst raschen Durchführung dar.

Die Zeitabstände, mit welchen die Oberfläche der Werkstücke durch den Schweißdraht abgetastet werden, können an die Geschwindigkeit, mit welcher der Schweißbrenner während des Abtastprozesses über die Oberfläche der Werkstücke bewegt wird, entsprechend angepasst werden. Wenn also der Schweißbrenner während des Abtastprozesses mit einer geringeren Geschwindigkeit über die Oberfläche der Werkstücke bewegt wird, können längere Zeitintervalle zwischen den Abtastpunkten gewählt werden, als wenn der Schweißbrenner mit einer hohen Geschwindigkeit über die Werkstückoberfläche bewegt wird. Die untere Grenze für die Zeitintervalle zwischen zwei Abtastpunkten wird durch die Geschwindigkeit des Vorschubgeräts, mit dem der Schweißdraht zum Werkstück bewegt wird und vom Werkstück wieder wegbewegt wird, bestimmt. Die Zeitabstände und Abtastparameter können beispielsweise auch an das Material der Werkstücke, an das Material und den Durchmesser des verwendeten Schweißdrahts, die Geometrie des Schweißbrenners (Rohrbogenkrümmung), etc. angepasst werden.

Der Schweißbrenner wird vorzugsweise in einem Winkel von 60° bis 90° zur Oberfläche der Werkstücke orientiert, sodass der Schweißdraht in einem solchen Winkel von 60° bis 90° zur Oberfläche der Werkstücke und von der Oberfläche der Werkstücke weg bewegt werden kann. Diese Werte haben sich für das Abtastverfahren als besonders geeignet herausgestellt. Zu flache Winkel sind für das Abtastverfahren ungeeignet, da es durch ein seitliches Auslenken des Schweißdrahts bzw. Verbiegen des Schweißdrahts zu Ungenauigkeiten kommen kann.

Gemäß einem weiteren Merkmal der Erfindung wird beim Detektieren eines längeren Kurzschlusses zwischen dem Schweißdraht und den Werkstücken der Schweißdraht während des Abtastprozesses mit einer höheren Rückwärtsgeschwindigkeit als der ersten Rückwärtsgeschwindigkeit von der Oberfläche der Werkstücke wegbewegt. Ein länger andauernder Kurzschluss zwischen dem Schweißdraht und den Werkstücken ist ein Indiz für das Vorliegen einer Kante, da trotz einer Rückwärtsbewegung des Schweißdrahts der Kurzschluss länger bestehen bleibt. Durch diese Maßnahme wird auf Veränderungen der Oberfläche der Werkstücke Rücksicht genommen und der Abtastprozess durch die höhere Rückwärtsgeschwindigkeit des Schweißdrahts als der ersten Rückwärtsgeschwindigkeit beschleunigt. Insbesondere wenn der Schweißbrenner während des Abtastprozesses an eine Kante gelangt, wird dadurch der Schweißdraht rascher auf die durch die Kante bedingte höhere Position der Werkstückoberfläche gebracht. Die Dauer des Kurzschlusses, ab der eine höhere Rückwärtsgeschwindigkeit als der ersten Rückwärtsgeschwindigkeit angewendet wird, kann aus entsprechenden Erfahrungswerten ermittelt und festgelegt werden.

Ebenso kann der Schweißdraht mit einer höheren Vorwärtsgeschwindigkeit als der ersten Vorwärtsgeschwindigkeit zur Oberfläche der Werkstücke bewegt werden, nachdem der Schweißdraht mit der höheren Rückwärtsgeschwindigkeit als der ersten Rückwärtsgeschwindigkeit von der Oberfläche der Werkstücke wegbewegt und kein Kurzschluss detektiert wird. Auch diese Maßnahme trägt zu einer rascheren Durchführung des Abtastprozesses bei und das Ende der detektierten Kante kann somit genauer dargestellt werden.

Für eine ausreichend genaue Detektion einer Kante wird der Schweißbrenner an zumindest drei Stellen quer zu einer erwarteten Kante über die Oberfläche der Werkstücke bewegt. Dies stellt bei besonders häufig vorkommenden geraden Kanten zwischen zwei Werkstücken eine ausreichend genaue Erfassung dar, da dadurch der Anfangspunkt, Endpunkt und Verlauf der Kante eindeutig festgelegt wird.

Vorteilhafterweise werden während eines Verfahrens zur Durchführung eines Schweißprozesses automatisch Schweißparameter in Abhängigkeit der während eines oben beschriebenen Abtastverfahrens ermittelten Kante und allenfalls der ermittelten Kantenparameter, wie Kantenhöhe, Kantenneigung oder Kantenradius, geregelt. Wie bereits oben erwähnt, können die ermittelten realen Werte der Kantenparameter, wie Kantenhöhe, Kantenneigung oder Kantenradius, beim nachfolgenden Schweißprozess berücksichtigt werden und zur Erzielung einer besseren Schweißqualität bzw. Reduktion der Ausschussrate, eine Anpassung der Schweißparameter an die ermittelten realen Werte vorgenommen werden. Beispielsweise kann die Lichtbogenlänge, die Stick-out-Länge, die Drahtvorschubgeschwindigkeit oder die Brennergeschwindigkeit entsprechend angepasst werden oder unter bestimmten Voraussetzungen sogar ein Prozesswechsel durchgeführt werden.

Beispielsweise kann während des Schweißprozesses der Schweißstrom und bzw. oder die Schweißspannung und bzw. oder die Vorschubgeschwindigkeit des Schweißdrahts in Abhängigkeit der ermittelten Kante und allenfalls der ermittelten Kantenparameter, wie Kantenhöhe, Kantenneigung oder Kantenradius, geregelt werden.

Die vorliegende Erfindung wird anhand der beigefügten Zeichnungen näher erläutert. Darin zeigen:
- Fig. 1: eine Prinzipskizze eines Schweißgeräts zur Durchführung eines Schweißprozesses und Abtastprozesses;
- Fig. 2: ein möglicher Weg des Schweißbrenners entlang der Oberfläche metallischer Werkstücke während eines Abtastprozesses;
- Fig. 3: eine Prinzipskizze zur Erklärung des gegenständlichen Verfahrens zum Abtasten der Oberfläche metallischer Werkstücke zum Zwecke der Detektion einer Kante;
- Fig. 4: eine Prinzipskizze zur Erklärung der Ermittlung der Höhe einer Kante aus den Positionswerten der Oberfläche der Werkstücke;
- Fig. 5: eine Prinzipskizze zur Erklärung der Ermittlung der Kantenneigung den Positionswerten der Oberfläche der Werkstücke;
- Fig. 6: eine Prinzipskizze zur Erklärung der Ermittlung des Kantenradius aus den Positionswerten der Oberfläche der Werkstücke; und
- Fig. 7: eine Variante des erfindungsgemäßen Abtastverfahrens mit unterschiedlichen Vorschubgeschwindigkeiten des Schweißdrahts in Abhängigkeit der Positionswerte der Oberfläche der Werkstücke.

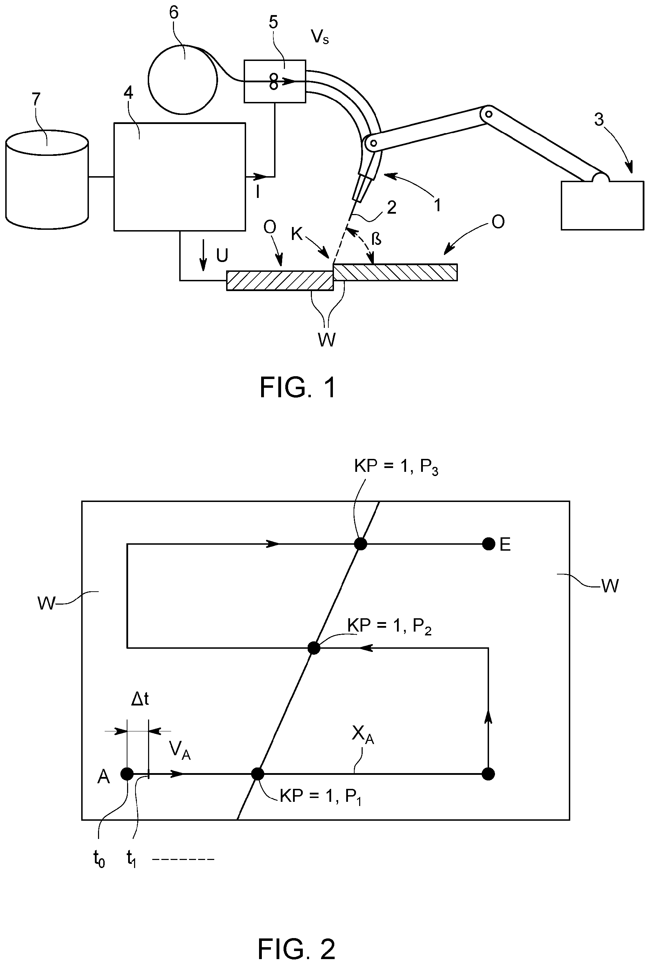

Fig. 1 zeigt eine Prinzipskizze eines Schweißgeräts zur Durchführung eines Schweißprozesses und Abtastprozesses. Ein Schweißbrenner 1 mit einem Schweißdraht 2 ist mit einem entsprechenden Manipulator 3, beispielsweise einem Schweißroboter verbunden. Eine Schweißstromquelle 4 versorgt den Schweißbrenner 1 bzw. den Schweißdraht 2 mit dem Schweißstrom I und der Schweißspannung U. Über ein Vorschubgerät 5 wird der Schweißdraht 2 mit einer Vorschubgeschwindigkeit v_{S} von einer Drahtrolle 6 zum Schweißbrenner 1 befördert. Während des Abtastprozesses wird der Schweißbrenner 1 mit dem Schweißdraht 2 mit Hilfe des Manipulators 3 entlang einer vorgegebenen Bahn x_{A} und mit einer vorgegebenen Geschwindigkeit V_{A} über die Oberfläche O der Werkstücke W bewegt. Zu vorgegebenen Zeitpunkten tᵢ wird der Schweißdraht 2 mit einer ersten Vorwärtsgeschwindigkeit v_{SV} zur Oberfläche O der Werkstücke W bewegt, bis von der Schweißstromquelle 4 ein Kontakt des Schweißdrahts 2 mit einem der Werkstücke W detektiert wird. Diese Detektion erfolgt durch die Messung des Einbruchs der Spannung beim Kurzschluss zwischen Schweißdraht 2 und Werkstück W. Danach wird der Schweißdraht 2 mit einer ersten Rückwärtsgeschwindigkeit v_{SR} wieder von den Werkstücken W wegbewegt. Die Position Pᵢ der Oberfläche O der Werkstücke W wird zu jedem der Zeitpunkte tᵢ in der Schweißstromquelle 4 ermittelt und gespeichert. Bei bisherigen Abtastverfahren wurden diese Positionswerte Pᵢ an den Manipulator 3 weitergeleitet, was einen hohen Datenaustausch zwischen Schweißstromquelle 4 und Manipulator 3 bedeutete und das Abtastverfahren verlangsamt. Erfindungsgemäß wird nun eine Kante K an der Oberfläche O der Werkstücke W ermittelt, wenn die aktuelle Position Pᵢ der Oberfläche O der Werkstücke W um einen vorgegebenen Schwellwert S über zumindest einer der gespeicherten vorhergehenden Positionen Pᵢ₋ₙ der Oberfläche O der Werkstücke W liegt. Im Falle der Überschreitung des vorgegebenen Schwellwerts S wird ein Kantendetektionsparameter KP gesetzt, im einfachsten Fall lediglich ein Bit auf "1" gesetzt und zusammen mit dem aktuellen Positionswert Pᵢ ausgegeben. Im Gegensatz zu bisherigen Verfahren muss nun lediglich der Wert des Kantendetektionsparameters KP zusammen mit dem aktuellen Positionswert Pᵢ an den Manipulator 3 übermittelt werden, wodurch das Verfahren erheblich beschleunigt oder die Genauigkeit erhöht werden kann. Während des Abtastprozesses wird der Schweißbrenner 1 vorzugsweise in ein einem Winkel β von 60° bis 90°zur Oberfläche O der Werkstücke W orientiert.

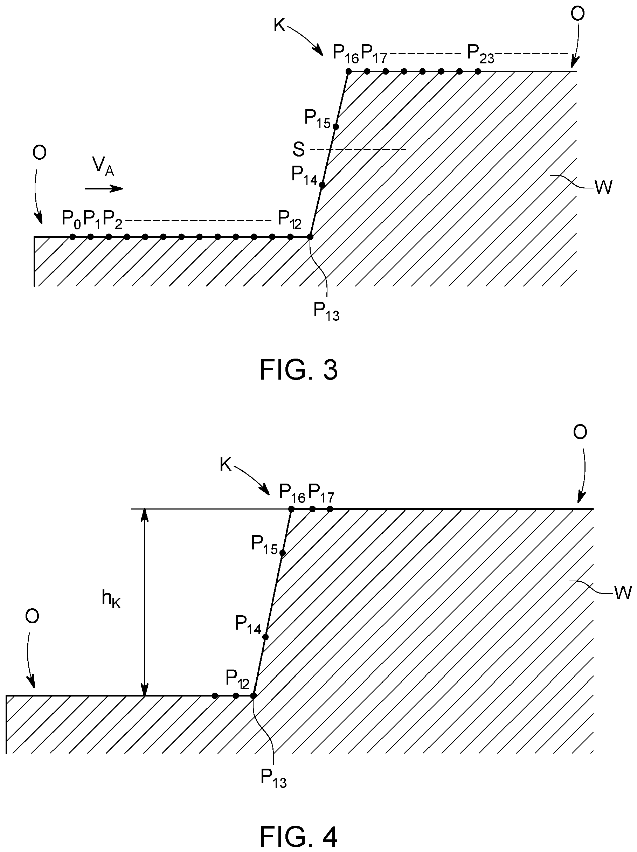

Fig. 2 zeigt einen möglichen Weg des Schweißbrenners 1 entlang der Oberfläche O metallischer Werkstücke W während eines Abtastprozesses in der Ansicht auf die Werkstücke W. Bei einer üblicherweise gerade verlaufenden Kante K eignet sich beispielsweise eine mäanderförmige Bahn x_{A} des Schweißbrenners 1 über die Werkstücke W für eine eindeutige Feststellung der Lage der Kante K. Dementsprechend wird der Schweißbrenner 1 von einem Anfangspunkt A mäanderförmig um die zu erwartende Lage der Kante K bis zu einem Endpunkt E geführt. Entlang der vorgegebenen Bahn x_{A} wird zu vorgegebenen Zeitpunkten tᵢ das Abtastverfahren durchgeführt, indem der Schweißdraht 2 zum Werkstück W bewegt wird, bis ein physischer Kontakt (Kurzschluss) zwischen Schweißdraht 2 und Werkstück W von der Stromquelle 4 festgestellt wird. Danach wird der Schweißdraht 2 vom Werkstück W wegbewegt, und die über den Antrieb des Vorschubgeräts 5 ermittelten Werte als Position Pᵢ der Oberfläche O der Werkstücke W festgelegt. Wenn eine Kante K detektiert wird (Beschreibung siehe Fig. 3) wird der Kantendetektionsparameter KP beispielsweise auf 1 gesetzt und die jeweilige Position Pᵢ gespeichert. Im dargestellten Ausführungsbeispiel werden an den 3 Punkten entlang der Kante K, wo der Kantenparameter KP=1 die Positionswerte Pᵢ, P₂ und P₃ gespeichert. Somit ist es nicht mehr notwendig, sämtliche Positionswerte Pᵢ, welche zu allen Zeitpunkten tᵢ festgestellt werden, zu speichern, und an den Manipulator 3 weiterzuleiten, sondern lediglich den Kantendetektionsparameter KP, der im einfachsten Fall lediglich ein Bit umfasst, und den zugehörigen Positionswert Pᵢ. Somit kann zur eindeutigen Festlegung der geraden Kante K die Übermittlung von drei Kantenparametern KP samt Positionswerten Pᵢ ausreichen. Der Schweißbrenner 1 kann entsprechend der Lage der zu erwartenden Kante K entsprechend ausgerichtet werden, wodurch Rücksicht darauf genommen werden kann, ob der Schweißbrenner 1 von oben nach unten über die Kante K bewegt wird oder umgekehrt von unten nach oben.

In Fig. 3 ist eine Prinzipskizze zur Erklärung des gegenständlichen Verfahrens zum Abtasten der Oberfläche O metallischer Werkstücke W zum Zwecke der Detektion einer Kante K dargestellt. Diese Darstellung zeigt das erfindungsgemäße Abtastverfahren, bei dem zu vorgegebenen Zeitpunkten tᵢ die Positionen Pᵢ der Oberfläche O Werkstücke W mit Hilfe des Schweißdrahts 2 erfasst werden. Wenn die aktuelle Position Pᵢ der Oberfläche O der Werkstücke W um einen vorgegebenen Schwellwert S über zumindest einer der gespeicherten vorhergehenden Positionen Pᵢ₋ₙ der Oberfläche O der Werkstücke W liegt, wird ein Kantendetektionsparameter KP gesetzt und zusammen mit dem aktuellen Positionswert Pᵢ ausgegeben und das Vorliegen einer Kante K angezeigt. Im gegenständlichen Fall ist dies bei Position P₁₅ der Fall, wo der Schwellwert S überschritten wurde. Zur Glättung können Mittelwerte von mehreren, vorzugsweise 2 bis 100, gespeicherten vorhergehenden Positionen Pᵢ₋ₙ als Vergleichswert der aktuellen Position Pᵢ herangezogen werden. Durch eine entsprechende Mittelwertbildung wird bei einer langsam stetig ansteigenden Oberfläche O der Werkstücke W nie eine Kante K detektiert und der Kantendetektionsparameter KP gesetzt. Ebenso wie der Beginn der Kante K kann auch das Ende der Kante K über die Positionen Pᵢ ermittelt werden, wenn festgestellt wird, dass die aktuelle Position Pᵢ der Oberfläche O der Werkstücke W gegenüber zumindest einem der gespeicherten vorhergehenden Positionen Pᵢ₋ₙ im Wesentlichen gleich bleibt. Bei Position P₁₇ gemäß Fig. 3 ist die Position im Wesentlichen gleich wie der vorhergehende Wert P₁₆, sodass das Ende der Kante K definiert werden kann.

Fig. 4 zeigt eine Prinzipskizze zur Erklärung der Ermittlung der Höhe h_{K} einer Kante K aus den Positionswerten Pᵢ der Oberfläche O der Werkstücke W. Aus der Differenz der Positionen Pᵢ, Oberfläche O der Werkstücke W am Ende der ermittelten Kante K und der letzten gespeicherten Position vor dem Feststellen der Kante K kann die Kantenhöhe h_{K} ermittelt werden. Im gegenständlichen Beispiel würde die Höhe der Kante h_{K} als Differenz der Position P₁₆ und P₁₃ ermittelt werden.

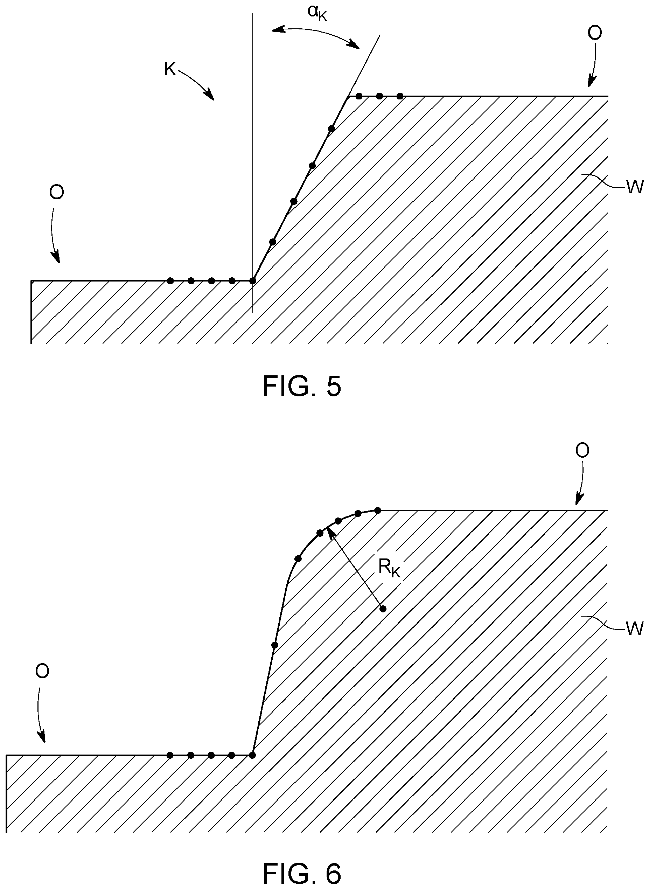

Fig. 5 zeigt eine Prinzipskizze zur Erklärung der Ermittlung der Kantenneigung α_{K} den Positionswerten Pᵢ der Oberfläche O der Werkstücke W. Aus den ermittelten Positionswerten Pᵢ und der Feststellung des Beginns und des Endes der Kante K kann die Kantenneigung α_{K} zuverlässig ermittelt werden.

In Fig. 6 ist eine Prinzipskizze zur Erklärung der Ermittlung des Kantenradius R_{K} aus den Positionswerten Pᵢ der Oberfläche O der Werkstücke W dargestellt. Aus den ermittelten Positionswerten Pᵢ ab dem Beginn der Detektion der Kante K bis zum Ende der Detektion der Kante K kann auf den Radius R_{K} der Kante K rückgeschlossen und ein entsprechender Wert ermittelt werden. Abweichungen des Kantenradius R_{K} vom Sollwert können während eines Schweißprozesses durch Anpassung der Schweißparameter, insbesondere des Schweißstroms I der Schweißspannung U oder der Vorschubgeschwindigkeit v_{S} des Schweißdrahtes 2 ausgeglichen werden.

Während des durchzuführenden Schweißprozesses können die Schweißparameter, wie zum Beispiel die Lichtbogenlänge, die Stick-out-Länge, die Drahtvorschubgeschwindigkeit oder die Brennergeschwindigkeit an die zuvor beim Kantendetektionsprozess ermittelten Kantenparameter (Kantenhöhe, Kantenneigung, Kantenradius) angepasst werden. Wenn ein Schweißprozess aufgrund der realen Kantenbedingungen nicht durchgeführt werden kann, beispielsweise, weil der Durchmesser des Schweißdrahts zu gering ist, kann eine Fehlermeldung ausgegeben werden.

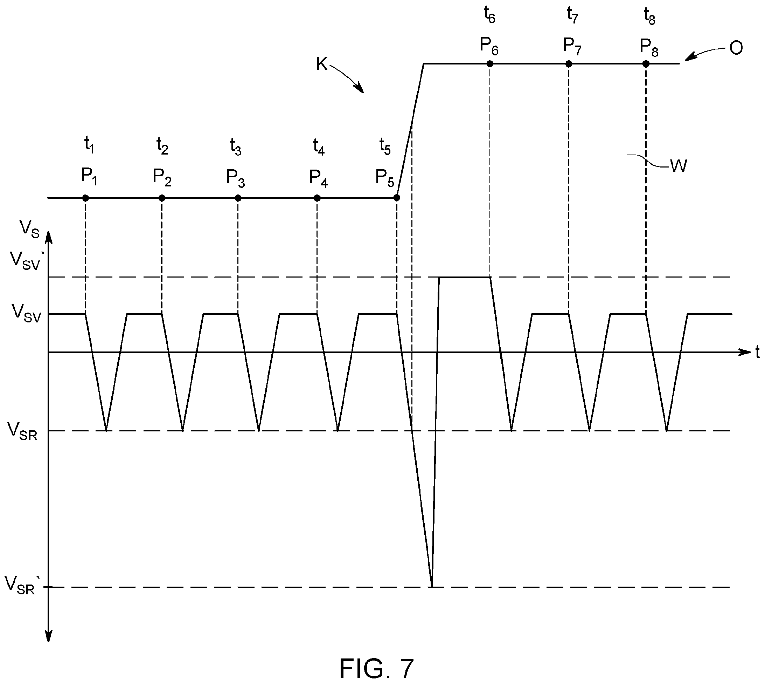

Schließlich zeigt Fig. 7 eine Variante des erfindungsgemäßen Abtastverfahrens mit unterschiedlichen Vorschubgeschwindigkeiten V_{S} des Schweißdrahts 2 in Abhängigkeit der Positionswerte Pᵢ der Oberfläche O der Werkstücke W. Im oberen Teil der Fig. 7 ist wiederum eine Kante K zwischen zwei Werkstücken W im Querschnitt dargestellt, und die Zeitpunkte tᵢ, zu welchen die Position Pᵢ der Oberfläche O der Werkstücke W festgestellt wird, beginnend mit der Position P₁ zum Zeitpunkt t₁ bis zur Position P₈ zum Zeitpunkt t₈. Während des Abtastprozesses wird der Schweißdraht 2 zu den Zeitpunkten tᵢ mit einer vorgegebenen ersten Vorwärtsgeschwindigkeit v_{SV} zum Werkstück W bewegt, bis ein Kurzschluss detektiert wird und danach mit einer vorgegebenen ersten Rückwärtsgeschwindigkeit v_{SR} vom Werkstück W wegbewegt. Dies ist bei den ersten fünf Punkten P₁ bis P₅ dargestellt. Wird aufgrund der Kante K ein längerer Kurzschluss detektiert, was bei Position P₅ zum Zeitpunkt t₅ der Fall ist, kann der Schweißdraht 2 mit einer höheren Rückwärtsgeschwindigkeit v_{SR}' als der ersten Rückwärtsgeschwindigkeit v_{SR} von der Oberfläche O der Werkstücke W wegbewegt werden. Dadurch kann das Abtastverfahren noch schneller und genauer durchgeführt werden. Nach dem Abtastschritt mit der höheren Rückwärtsgeschwindigkeit V_{SR}' wird die Vorwärtsgeschwindigkeit v_{SV} auf eine höhere Vorwärtsgeschwindigkeit V_{SV}' als die erste Vorwärtsgeschindigkeit v_{SV} erhöht, sofern kein Kurzschluss mehr detektiert wird. Dies ist im dargestellten Ausführungsbeispiel vor der Position P₆ zum Zeitpunkt t₆ der Fall.

## Patentansprüche

1. Verfahren zum Abtasten der Oberfläche (O) metallischer Werkstücke (W), wobei vor der Durchführung eines Schweißprozesses während eines Abtastprozesses ein Schweißbrenner (1) mit einem abschmelzbaren Schweißdraht (2) mit Hilfe eines Manipulators (3) entlang einer vorgegebenen Bahn (x_{A}) und mit einer vorgegebenen Geschwindigkeit (v_{A}) über die Oberfläche (O) der Werkstücke (W) bewegt wird, und zu vorgegebenen Zeitpunkten (tᵢ) der Schweißdraht (2) mit einer ersten Vorwärtsgeschwindigkeit (v_{SV}) zur Oberfläche (O) der Werkstücke (W) bewegt wird, bis von einer Schweißstromquelle (4) ein Kontakt des Schweißdrahts (2) mit einem der Werkstücke (W) detektiert wird, und der Schweißdraht (2) anschließend mit einer ersten Rückwärtsgeschwindigkeit (v_{SR}) wieder von den Werkstücken (W) wegbewegt wird, und die Position (Pᵢ) der Oberfläche (O) der Werkstücke (W) zu jedem Zeitpunkt (tᵢ) in der Schweißstromquelle (4) ermittelt und gespeichert wird, wobei beim Überschreiten der aktuellen Position (Pᵢ) der Oberfläche (O) der Werkstücke (W) um einen vorgegebenen Schwellwert (S) über zumindest einer der gespeicherten vorhergehenden Positionen (Pᵢ₋ₙ) der Oberfläche (O) der Werkstücke (W) eine Kante (K) ermittelt wird, wobei im Falle einer Ermittlung einer Kante (K) ein Kantendetektionsparameter (KP) gesetzt und zusammen mit dem aktuellen Positionswert (P₁) ausgegeben und an den Manipulator (3) übertragen wird, **dadurch gekennzeichnet, dass** bei Gleichbleiben der aktuellen Position (Pᵢ) der Oberfläche (O) der Werkstücke (W) gegenüber zumindest einer der gespeicherten vorhergehenden Positionen (Pᵢ₋ₙ) das Ende der Kante (K) festgestellt wird.

2. Verfahren nach Anspruch 1, **dadurch gekennzeichnet, dass** beim Überschreiten der aktuellen Position (Pᵢ) der Oberfläche (O) der Werkstücke (W) um einen vorgegebenen Schwellwert (S) über dem Mittelwert von mehreren, vorzugsweise 2 bis 100 gespeicherten vorhergehenden Positionen (Pᵢ₋ₙ) der Oberfläche (O) der Werkstücke (W) eine Kante (K) ermittelt wird.

3. Verfahren nach Anspruch 1 oder 2, **dadurch gekennzeichnet, dass** die Differenz der Position (Pᵢ) der Oberfläche (O) der Werkstücke (W) am Ende der ermittelten Kante (K) und der letzten gespeicherten Position (Pᵢ) vor dem Feststellen der Kante (K) in senkrechter Richtung zur Oberfläche (O) der Werkstücke (W) oder in Richtung der Längserstreckung des Schweißdrahts (2) als Wert der Kantenhöhe (h_{K}) ermittelt und ausgegeben wird.

4. Verfahren nach einem der Ansprüche 1 bis 3, **dadurch gekennzeichnet, dass** aus den gespeicherten Positionen (Pᵢ) der Oberfläche (O) der Werkstücke (W) zwischen dem Ende der ermittelten Kante (K) und der gespeicherten Position (Pᵢ) nach dem Feststellen der Kante (K) die Kantenneigung (α_{K}) ermittelt und ausgegeben wird.

5. Verfahren nach einem der Ansprüche 1 bis 4, **dadurch gekennzeichnet, dass** aus den gespeicherten Positionen (Pᵢ) der Oberfläche (O) der Werkstücke (W) zwischen dem Ende der ermittelten Kante (K) und der gespeicherten Position (Pᵢ) nach dem Feststellen der Kante (K) der Radius (R_{K}) der Kante (K) ermittelt und ausgegeben wird.

6. Verfahren nach einem der Ansprüche 3 bis 5, **dadurch gekennzeichnet, dass** die Kantenhöhe (h_{K}), die Kantenneigung (α_{K}) und bzw. oder der Radius (R_{K}) der Kante (K) an den Manipulator (3) übermittelt wird.

7. Verfahren nach einem der Ansprüche 1 bis 6, **dadurch gekennzeichnet, dass** der Schweißdraht (2) in Zeitabständen (Δt) von 5ms bis 50ms, vorzugsweise von 10ms, zur Oberfläche (O) der Werkstücke (W) bewegt wird.

8. Verfahren nach Anspruch 7, **dadurch gekennzeichnet, dass** die Zeitabstände (Δt) an die Geschwindigkeit (v_{A}) , mit welcher der Schweißbrenner (1) während des Abtastprozesses über die Oberfläche (O) der Werkstücke (W) bewegt wird, angepasst wird.

9. Verfahren nach einem der Ansprüche 1 bis 8, **dadurch gekennzeichnet, dass** der Schweißbrenner (1) in einem Winkel (β) von 60° bis 90° zur Oberfläche (O) der Werkstücke (W) orientiert wird, sodass der Schweißdraht (2) in einem solchen Winkel (β) von 60° bis 90° zur Oberfläche (O) der Werkstücke (W) und von der Oberfläche (O) der Werkstücke (W) weg bewegt wird.

10. Verfahren nach einem der Ansprüche 1 bis 9, **dadurch gekennzeichnet, dass** beim Detektieren eines längeren Kurzschlusses zwischen dem Schweißdraht (2) und den Werkstücken (W) der Schweißdraht (2) mit einer höheren Rückwärtsgeschwindigkeit (v_{SR}') als der ersten Rückwärtsgeschwindigkeit (v_{SR}) von der Oberfläche (O) der Werkstücke (W) wegbewegt wird.

11. Verfahren nach Anspruch 10, **dadurch gekennzeichnet, dass** der Schweißdraht (2) mit einer höheren Vorwärtsgeschwindigkeit (v_{SV}') als der ersten Vorwärtsgeschwindigkeit (v_{SV}) zur Oberfläche (O) der Werkstücke (W) bewegt wird, nachdem der Schweißdraht (2) mit der höheren Rückwärtsgeschwindigkeit (v_{SR}') als der ersten Rückwärtsgeschwindigkeit (v_{SR}) von der Oberfläche (O) der Werkstücke (W) wegbewegt und kein Kurzschluss detektiert wird.

12. Verfahren nach einem der Ansprüche 1 bis 11, **dadurch gekennzeichnet, dass** der Schweißbrenner (1) an zumindest drei Stellen quer zu einer erwarteten Kante (K) über die Oberfläche (O) der Werkstücke bewegt wird.

13. Verfahren zur Durchführung eines Schweißprozesses mit einem Schweißbrenner (1) mit einem abschmelzbaren Schweißdraht (2) an Werkstücken (W), **dadurch gekennzeichnet, dass** während des Schweißprozesses automatisch Schweißparameter in Abhängigkeit der während des Verfahrens nach einem der Ansprüche 1 bis 12 ermittelten Kante (K) und allenfalls der ermittelten Kantenparameter, wie Kantenhöhe (h_{K}), Kantenneigung (α_{K}) oder Kantenradius (R_{K}), geregelt werden.

14. Verfahren nach Anspruch 13, **dadurch gekennzeichnet, dass** während des Schweißprozesses der Schweißstrom (I) und bzw. oder die Schweißspannung (U) und bzw. oder die Vorschubgeschwindigkeit (v_{S}) des Schweißdrahts (2) in Abhängigkeit der während des Abtastprozesses ermittelten Kante (K) und allenfalls der ermittelten Kantenparameter, wie Kantenhöhe (h_{K}), Kantenneigung (α_{K}) oder Kantenradius (R_{K}), geregelt werden.

## Claims

1. Method for scanning the surface (O) of metallic workpieces (W), wherein, during a scanning process before a welding process is carried out, a welding torch (1) with a meltable welding wire (2) is moved over the surface (O) of the workpieces (W) using a manipulator (3) along a predefined path (x_{A}) and at a specified speed (v_{A}), and at predefined times (tᵢ) the welding wire (2) is moved towards the surface (O) of the workpieces (W) at a first forward speed (v_{SV}) until a contact of the welding wire (2) with one of the workpieces (W) is detected by a welding power source (4), and the welding wire (2) is then moved away from the workpieces (W) again at a first reverse speed (v_{SR}), and the position (Pᵢ) of the surface (O) of the workpieces (W) at each time (tᵢ) is determined and stored in the welding power source (4), wherein an edge (K) is determined if the current position (Pᵢ) of the surface (O) of the workpieces (W) exceeds at least one of the stored previous positions (Pᵢ₋ₙ) of the surface (O) of the workpieces (W) by a predefined threshold value (S), wherein if an edge (K) is determined, an edge detection parameter (KP) is set and output together with the current position value (Pi) and transferred to the manipulator (3), **characterized in that** the end of the edge (K) is determined if the current position (Pᵢ) of the surface (O) of the workpieces (W) remains the same with respect to at least one of the stored previous positions (Pᵢ₋ₙ).

2. Method according to Claim 1, **characterized in that** an edge (K) is determined if the current position (Pᵢ) of the surface (O) of the workpieces (W) exceeds the mean value of a plurality, preferably 2 to 100, of stored previous positions (Pᵢ₋ₙ) of the surface (O) of the workpieces (W) by a predefined threshold value (S).

3. Method according to Claim 1 or 2, **characterized in that** the difference between the position (Pᵢ) of the surface (O) of the workpieces (W) at the end of the determined edge (K) and the last stored position (Pᵢ) before the detection of the edge (K) in a direction perpendicular to the surface (O) of the workpieces (W), or in the direction of the longitudinal extension of the welding wire (2), is determined as the value of the edge height (h_{K}) and output.

4. Method according to any one of Claims 1 to 3, **characterized in that** from the stored positions (Pᵢ) of the surface (O) of the workpieces (W) between the end of the determined edge (K) and the stored position (Pᵢ) following the detection of the edge (K), the edge inclination (α_{K}) is determined and output.

5. Method according to any one of Claims 1 to 4, **characterized in that** from the stored positions (Pᵢ) of the surface (O) of the workpieces (W) between the end of the determined edge (K) and the stored position (Pᵢ) following the detection of the edge (K), the radius (R_{K}) of the edge (K) is determined and output.

6. Method according to any one of Claims 3 to 5, **characterized in that** the edge height (h_{K}), the edge inclination (α_{K}) and/or the radius (R_{K}) of the edge (K) are transferred to the manipulator (3).

7. Method according to any one of Claims 1 to 6, **characterized in that** the welding wire (2) is moved towards the surface (O) of the workpieces (W) at time intervals (Δt) of 5ms to 50ms, preferably of 10ms.

8. Method according to Claim 7, **characterized in that** the time intervals (Δt) are adjusted to match the speed (v_{A}) at which the welding torch (1) is moved over the surface (O) of the workpieces (W) during the scanning process.

9. Method according to any one of Claims 1 to 8, **characterized in that** the welding torch (1) is oriented at an angle (β) of 60° to 90° to the surface (O) of the workpieces (W), so that the welding wire (2) is moved towards the surface (O) of the workpieces (W) and away from the surface (O) of the workpieces (W) at such an angle (β) of 60° to 90°.

10. Method according to any one of Claims 1 to 9, **characterized in that** on detecting a longer short-circuit between the welding wire (2) and the workpieces (W), the welding wire (2) is moved away from the surface (O) of the workpieces (W) at a higher reverse speed (v_{SR}') than the first reverse speed (v_{SR}) .

11. Method according to Claim 10, **characterized in that** the welding wire (2) is moved towards the surface (O) of the workpieces (W) at a higher forward speed (v_{SV}') than the first forward speed (v_{SV}) after the welding wire (2) is moved away from the surface (O) of the workpieces (W) at the higher reverse speed (v_{SR}') than the first reverse speed (v_{SR}) and no short-circuit is detected.

12. Method according to any one of Claims 1 to 11, **characterized in that** the welding torch (1) is moved over the surface (O) of the workpieces transverse to an expected edge (K) at at least three points.

13. Method for carrying out a welding process using a welding torch (1) with a meltable welding wire (2) on workpieces (W), **characterized in that** during the welding process, welding parameters are automatically controlled depending on the edge (K) determined during the method according to any of Claims 1 to 12 and if necessary, on the edge parameters determined, such as edge height (h_{K}), edge inclination (α_{K}), or edge radius (R_{K}) .

14. Method according to Claim 13, **characterized in that** during the welding process, the welding current (I) and/or the welding voltage (U) and/or the conveying speed (v_{S}) of the welding wire (2) are controlled depending on the edge (K) determined during the scanning process and if necessary, on the determined edge parameters, such as edge height (h_{K}), edge inclination (α_{K}), or edge radius (R_{K}).

## Revendications

1. Procédé pour explorer la surface (O) de pièces métalliques (W), où avant la mise en œuvre d'un processus de soudage pendant un processus d'exploration, une torche de soudage (1) avec un fil de soudage consommable (2) est déplacée à l'aide d'un manipulateur (3) le long d'une trajectoire prédéfinie (X_{A}) et avec une vitesse prédéfinie (v_{A}) au-dessus de la surface (O) des pièces (W), et à des instants prédéfinis (tᵢ) le fil de soudage (2) est déplacé avec une première vitesse en avant (v_{SV}) vers la surface (O) des pièces (W), jusqu'à ce qu'un contact du fil de soudage (2) avec l'une des pièces (W) soit détecté par une source de courant de soudage (4), et le fil de soudage (2) est ensuite éloigné de nouveau des pièces (W) à une première vitesse en arrière (v_{SR}), et la position (Pᵢ) de la surface (O) des pièces (W) à chaque instant (tᵢ) est déterminée et mémorisée dans la source de courant de soudage (4), où en cas de dépassement de la position actuelle (Pᵢ) de la surface (O) des pièces (W) d'une valeur seuil prédéfinie (S) au-dessus d'au moins l'une des positions précédentes mémorisées (Pᵢ₋ₙ) de la surface (O) des pièces (W) une arête (K) est déterminée, où en cas d'une détermination d'une arête (K) un paramètre de détection d'arête (KP) est mis en place et émis et transmis au manipulateur (3) en même temps que la valeur de position actuelle (P₁), **caractérisé en ce que**, en cas de constance de la position actuelle (Pᵢ) de la surface (O) des pièces (W) par rapport à au moins l'une des positions précédentes mémorisées (Pᵢ₋ₙ) la fin de l'arête (K) est établie.

2. Procédé selon la revendication 1, **caractérisé en ce que**, en cas de dépassement de la position actuelle (Pᵢ) de la surface (O) des pièces (W) d'une valeur seuil prédéfinie (S) au-dessus de la moyenne de plusieurs, de préférence 2 à 100 positions précédentes mémorisées (Pᵢ₋ₙ) de la surface (O) des pièces (W), une arête (K) est déterminée.

3. Procédé selon la revendication 1 ou 2, **caractérisé en ce que** la différence de la position (Pᵢ) de la surface (O) des pièces (W) à la fin de l'arête déterminée (K) et de la dernière position mémorisée (Pᵢ) avant l'établissement de l'arête (K) dans la direction perpendiculaire à la surface (O) des pièces (W) ou dans la direction de l'étendue longitudinale du fil de soudage (2) est déterminée et émise en tant que valeur de la hauteur de l'arête (h_{K}).

4. Procédé selon l'une des revendications 1 à 3, **caractérisé en ce que**, à partir des positions mémorisées (Pᵢ) de la surface (O) des pièces (W) entre la fin de l'arête (K) déterminée et la position mémorisée (Pᵢ) après l'établissement de l'arête (K), l'inclinaison de l'arête (α_{K}) est déterminée et émise.

5. Procédé selon l'une des revendications 1 à 4, **caractérisé en ce que**, à partir des positions mémorisées (Pᵢ) de la surface (O) des pièces (W) entre la fin de l'arête (K) déterminée et la position mémorisée (Pᵢ) après l'établissement de l'arête (K), le rayon (R_{K}) de l'arête (K) est déterminé et émis.

6. Procédé selon l'une des revendications 3 à 5, **caractérisé en ce que** la hauteur de l'arête (h_{K}), l'inclinaison de l'arête (α_{K}) et/ou le rayon (R_{K}) de l'arête (K) est transmis au manipulateur (3).

7. Procédé selon l'une des revendications 1 à 6, **caractérisé en ce que** le fil de soudage (2) est déplacé vers la surface (O) des pièces (W) à des intervalles de temps (Δt) de 5 ms à 50 ms, de préférence de 10 ms.

8. Procédé selon la revendication 7, **caractérisé en ce que** les intervalles de temps (Δt) sont ajustés à la vitesse (v_{A}) à laquelle la torche de soudage (1) est déplacée pendant le processus d'exploration au-dessus de la surface (O) des pièces (W).

9. Procédé selon l'une des revendications 1 à 8, **caractérisé en ce que** la torche de soudage (1) est orientée sous un angle (β) de 60° à 90° par rapport à la surface (O) des pièces (W), de sorte que le fil de soudage (2) est éloigné sous un tel angle (β) de 60° à 90° par rapport à la surface (O) des pièces (W) et de la surface (O) des pièces (W).

10. Procédé selon l'une des revendications 1 à 9, **caractérisé en ce que**, en cas de détection d'un court-circuit plus long entre le fil de soudage (2) et les pièces (W), le fil de soudage (2) est éloigné de la surface (O) des pièces (W) avec une vitesse en arrière (v_{SR}') plus élevée que la première vitesse en arrière (v_{SR}).

11. Procédé selon la revendication 10, **caractérisé en ce que** le fil de soudage (2) est déplacé vers la surface (O) des pièces (W) avec une vitesse en avant (v_{SV}') plus élevée que la première vitesse en avant (v_{SV}) après que le fil de soudage (2) soit éloigné de la surface (O) des pièces (W) avec la vitesse en arrière (v_{SR}') plus élevée que la première vitesse en arrière (v_{SR}) et qu'aucun court-circuit ne soit détecté.

12. Procédé selon l'une des revendications 1 à 11, **caractérisé en ce que** la torche de soudage (1) est déplacée en au moins trois endroits transversalement à une arête (K) attendue au-dessus de la surface (O) des pièces.

13. Procédé pour la mise en œuvre d'un processus de soudage avec une torche de soudage (1) avec un fil de soudage consommable (2) sur des pièces (W), **caractérisé en ce que**, pendant le processus de soudage, des paramètres de soudage sont réglés automatiquement en fonction de l'arête (K) déterminée au cours du procédé selon l'une des revendications 1 à 12 et éventuellement des paramètres d'arête déterminés, comme la hauteur de l'arête (h_{K}), l'inclinaison de l'arête (α_{K}) ou le rayon de l'arête (R_{K}).

14. Procédé selon la revendication 13, **caractérisé en ce que**, pendant le processus de soudage, le courant de soudage (I) et /ou la tension de soudage (U) et/ou la vitesse d'avancement (v_{S}) du fil de soudage (2) sont réglés en fonction de l'arête (K) déterminée pendant le processus d'exploration et éventuellement des paramètres d'arête déterminés, tels que la hauteur de l'arête (h_{K}), l'inclinaison de l'arête (α_{K}) ou le rayon de l'arête (R_{K}).
